# EUROPEAN PATENT SPECIFICATION

(11) **EP 1 219 136 B1**
(45) Date of publication and mention of the grant of the patent: **18.06.2003**
(21) Application number: 00958264.4
(22) Date of filing: 06.09.2000
(51) Int. Cl.: H04R 19/00, G01L 9/00

(54) **A PRESSURE TRANSDUCER**
DRUCKWANDLER
TRANSDUCTEUR DE PRESSION

(30) Priority: 06.09.1999 DK 125399; 07.09.1999 DK 126599; 07.09.1999 US 390712; 12.05.2000 US 570493
(43) Date of publication of application: 03.07.2002
(73) Proprietor: SonionMEMS A/S, 2800 Kongens Lyngby (DK)
(72) Inventor: MÜLLENBORN, Matthias, DK-2800 Lyngby (DK); SCHEEL, Peter, U., DK-2820 Gentofte (DK); ROMBACH, Pirmin, Hermann, Otto, DK-2800 Lyngby (DK)
(74) Representative: Frederiksen, Jakob Pade
(86) International application number: DK0000490
(87) International publication number: WO01019133

(56) References cited:
- EP-B1- 0 561 566
- WO-A1-96/22515
- DE-A1- 4 207 951
- DE-C1- 4 207 950
- US-A- 5 936 164

## Description

### FIELD OF THE INVENTION

The present invention relates to a transducer, such as a capacitive transducer, pressure transducer, sound transducer, etc, and more specifically to a pressure transducer that is compatible with semiconductor manufacturing techniques and practices; according to the first part of Claim 1 and starts from EP-A-0 561 566.

### BACKGROUND OF THE INVENTION

In the hearing instrument and mobile communication system industry, one of the primary goals is to make components of small sizes while still maintaining good electroacoustic performance and operability giving good user friendliness and satisfaction. Technical performance data include sensitivity, noise, stability, compactness, robustness and insensitivity to electromagnetic interference (EMI) and other external and environmental conditions. In the past, several attempts have been made to make microphone systems smaller while maintaining or improving their technical performance data.

EP-A-561 566 discloses a solid state condenser microphone having a field effect transistor (FET) circuitry and a cavity or sound inlet on the same chip. The techniques and processes for manufacturing a FET circuitry are quite different from the techniques and processes used in manufacturing transducer elements. Consequently, the transducer element and FET system disclosed in EP-A-561 566 requires two (or possibly more) separate stages of production which by nature makes the production more complicated and thereby also more costly.

The development of hybrid microelectromechanical systems (MEMS) has progressed significantly over the last years. This has primarily to do with the development of appropriate techniques for manufacturing such systems. One of the advantages of such hybrid systems relates to the size with which relative complicated systems involving mechanical microtransducers and specially designed electronics may be manufactured.

It is known to package micro-machined transducers in SMD-packages (surface mount devices) in which a chip is die bonded on an organic or inorganic carrier (chip facing up) and wire bonded to leads which connect by soldering techniques to a printed circuit board (PCB) metallisation. Such packages tend to be large and expensive.

US 5,889,872 discloses a hybrid system consisting of a silicon microphone and an integrated circuit chip mounted onto it using wire bonding for the electrical connection between the silicon microphone and the integrated circuit chip. This solution has the disadvantage of requiring additional protection and space for the bonding wires.

US 5,856,914 discloses a flip-chip mounted micro-mechanical device, such as a condenser microphone, where part of the carrier upon which the micro-device is mounted, forms part of the final system. A disadvantage of this system is the fact that the micromechanical device may not be tested prior to the mounting on the carrier. Another disadvantage of the disclosed system relates to the chosen materials. The micromechanical device is comprised of Si whereas the carrier is made of a PCB or ceramic material. Differences in thermal expansion coefficients may easily complicate the integration of such different materials.

It is an object of the present invention to provide a transducer that
1. is easy to manufacture,
2. can be made available at a low cost,
3. includes an integrated circuit device,
4. has a small die size, and
5. is compatible with electronic equipment manufacturing processes, such as SMD pick and place techniques.

It is a further object of the present invention to provide a fully functional and encapsulated transducer that can be operated independently of its final position on e.g. a PCB.

It is a still further object of the present invention to provide a fully functional and encapsulated transducer that can be tested prior to mounting.
It is a still further object of the present invention to provide a transducer where the distance between the transducer element and the electronic circuit is minimised so as to minimise parasitics.

### SUMMARY OF THE INVENTION

According to the invention the above and other objects are fulfilled by providing, in a first aspect, a transducer, such as a capacitive transducer, a pressure transducer, a sound transducer, a loudspeaker, etc, comprising
- a first Si-based chip with a first upper surface and a first lower surface opposite the first upper surface and enclosing a first chamber extending from a first opening of the first chamber at the first upper surface and through the first Si-based chip to a second opening at the first lower surface, said first Si-based chip further comprising a first diaphragm that is positioned at the first lower surface and covering the second opening,
- a second Si-based chip with a second upper surface and a second lower surface, the second Si-based chip enclosing a second chamber extending into the second Si-based chip from a third opening at the second upper surface, the first Si-based chip being positioned on the second Si-based chip with the second opening aligned with the third opening,
characterised in that the second Si-based chip further comprises a Si-based integrated circuit, said Si-based integrated circuit being electrically connected to the first diaphragm via one or more contact elements, and said Si-based integrated circuit being integrated with the second Si-based chip and being positioned at the second upper surface of the second Si-based chip.

The transducer may further comprise a first back plate that is arranged adjacent and substantially parallel to the first diaphragm. The first diaphragm and the first back plate may be conductive and form a capacitor in combination whereby a miniature condenser microphone is formed.

Preferably, the first Si-based chip is flip-chip mounted on the second Si-based chip. The first diaphragm and the first back plate is connected to contact elements, such as solder bumps, on the first Si-based chip. The second Si-based chip has contact elements thereon corresponding to the contact elements of the first Si-based chip. The first Si-based chip is placed with Its first lower surface on the second upper surface of the second Si-based chip with the contacts in corresponding positions. When in position, the contacts are attached, e.g. by reflow soldering.

Further, the first Si-based chip and the second Si-based chip may have seal surfaces which surround the second and third openings, respectively. When the first Si-based chip is secured to the second Si-based chip the seal surfaces are connected to form a seal or a surrounding barrier. The seal may be an airtight seal, a hermetic seal, etc. The seal may be formed by a solder ring, an epoxy ring, etc.

Directional sensitivity may be obtained by introducing a fourth opening between the second chamber and the second lower surface.

Preferably, the integrated circuit comprises an ASIC, that is operationally connected to the first diaphragm. For example, in a condenser microphone according to the present invention, a commercially available ASIC chip may be further processed by etching the second chamber into the chip. Subsequently, the ASIC is connected to the first diaphragm and the first back plate via the above-mentioned contact elements. Preferably, the seal also surrounds the integrated circuit.

It is preferred to encapsulate the transducer in a polymer or in a metal layer that is sprayed, evaporated, or electroplated onto the transducer. The encapsulation should not cover the first opening in the first Si-based chip allowing the environment to communicate with the diaphragm. Preferably, the first opening is covered by a filter that is transparent to pressure or to pressure changes. This method of encapsulation eliminates the need for a container made of metal or ceramic whereby weight and size of the transducer is reduced.

A second way of obtaining directional sensitivity is by using two or more sensing elements such as an array of sensors e.g. with separated back chambers in the second Si-based chip in order to detect a phase difference of an acoustic wave.

Thus, in a second aspect, the present invention relates to directional transducers, such as directional pressure transducers, applying more than one pressure transducer.

In order to obtain directional sensitivity, the directional transducer may, in addition to the transducer according to the fist aspect, further comprise
- a third chamber being enclosed in the first Si-based chip and extending from a fifth opening of the third chamber at the first upper surface and through the first Si-based chip to a sixth opening at the first lower surface,
- a second diaphragm that is positioned at the first lower surface and covering the sixth opening of the third chamber, and
- a fourth chamber extending into the second Si-based chip from a seventh opening at the second upper surface, the sixth opening of the third chamber being aligned with the seventh opening.

The transducer may further comprise a second back plate that is arranged adjacent and substantially parallel to the second diaphragm. The second diaphragm and the second back plate may be conductive and form a capacitor in combination. Furthermore, the second diaphragm and the second back plate may be operationally connected to the integrated circuit via solder bumps.

Preferably, a filter covers the fifth opening. The transducer may further comprise an encapsulation enclosing the first and second Si-based chips and having an opening aligned with the first and fifth opening.

### BRIEF DESCRIPTION OF THE DRAWINGS

In the following the invention will be explained with reference to the drawing, in which:
Figure 1 is a cross section of a microphone according to the invention,
Figure 2 is a cross section of a directional microphone with one pressure grading sensing element, and
Figure 3 is a cross section of a directional microphone formed by an array of absolute pressure microphones using the detected phase difference.

### DETAILED DESCRIPTION OF THE INVENTION

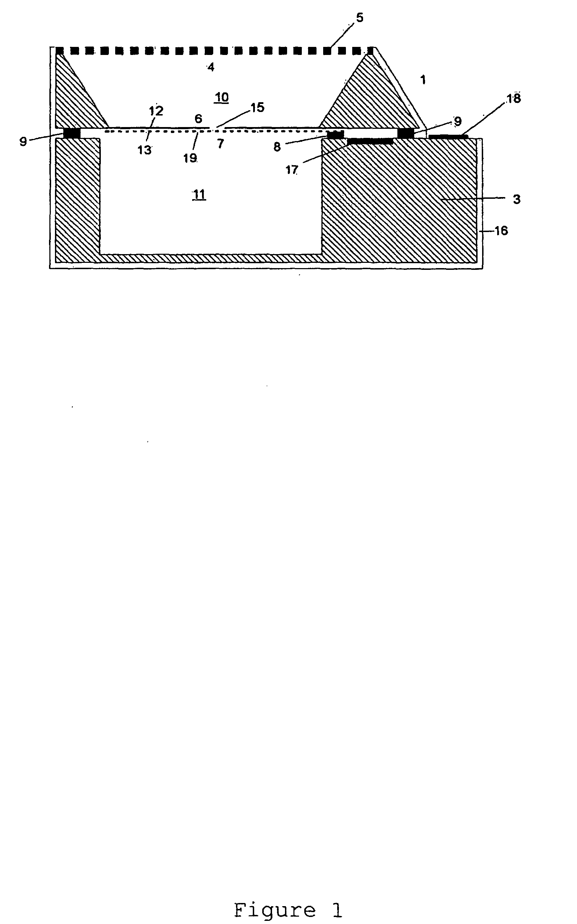

In Fig. 1, 2, and 3, dimensions such as material thickness and mutual distances and possibly other proportions are not necessarily drawn to the same scale. The size of the microphones is about 1-4 mm.

The microphone illustrated in Fig. 1 has the following structure. A silicon transducer chip 1 with a first chamber 10 etched therein extending from a first opening 4 at the upper surface and through the transducer to a second opening 6, carries a diaphragm 12 and a back plate 13 covering the second opening 6 in the transducer chip. The transducer chip 1 with the diaphragm 12 and a back plate 13 may be manufactured using traditional techniques for micro-machining/manufacturing. The diaphragm 12 and the back plate 13 are both electrically conductive and are arranged parallel in close proximity to each other, so that they form an electrical capacitor.

The back plate 13 has a plurality of perforations 19 making it acoustically transparent, and the diaphragm 12 has a tiny vent hole 15 for equalising the static pressure on both sides of the diaphragm 12.

The transducer chip 1 is flip-chip mounted via solder bumps 8 onto a post-processed silicon chip 3 comprising an electric circuit 17, such as an integrated circuit, on a surface thereof. The post-processed silicon chip 3 also has a second chamber 11 etched into it having a third opening 7. The transducer chip 1 is secured to the silicon chip 3 by means of an electrically conductive solder sealing ring 9 or by other means making an airtight seal.

It is an advantage of the invention that the transducer chip 1 and the silicon chip 3 are both based on silicon substrates, thereby avoiding thermally-induced stresses.

The diaphragm 12 and the back plate 13 are electrically connected to a number of separate solder bumps 8, which connect the diaphragm 12 and the back plate 13 to the silicon chip 3.

The first opening 4 is covered with a filter 5 or a flexible sheet or diaphragm of acoustically transparent material. The whole structure is encapsulated in a polymer or metal encapsulation 16 leaving the filter 5 and pad 18 free.

The function of the above-described structure is as follows. The first opening 4 functions as a sound inlet, and ambient sound pressure enters through the filter 5 covering the first opening 4 to the first chamber 10 functioning as a front chamber for the microphone. The sound pressure deflects the diaphragm 12, which causes the air between the diaphragm 12 and the back plate 13 to escape through the perforations 19. The chamber 11 functions as a back chamber for the microphone. The diaphragm 12 is movable relative to the back plate 13 in response to the sound pressure. When the diaphragm 12 is moved in response to the incident sound, the electrical capacitance of the electrical capacitor formed by the diaphragm 12 and the back plate 13 will vary in response to the incident sound. The integrated circuit 17 on the silicon chip 3 is electrically connected to the diaphragm 12 and the back plate 13 via the separate solder bumps 8. The integrated circuit 17 is designed to detect variations in the electrical capacitance of the capacitor formed by the diaphragm 12 and the back plate 13. The integrated circuit 17 has electrical connections to the pad 18 for electrically connecting it to a power supply and other electronic circuitry in e.g. a hearing instrument.

Variations and modifications in the herein described system, within the scope of transducers such as pressure transducers and capacitive transducers, will undoubtedly suggest themselves to those skilled in the art. Accordingly, the foregoing description should be taken as illustrative and not in a limiting sense.

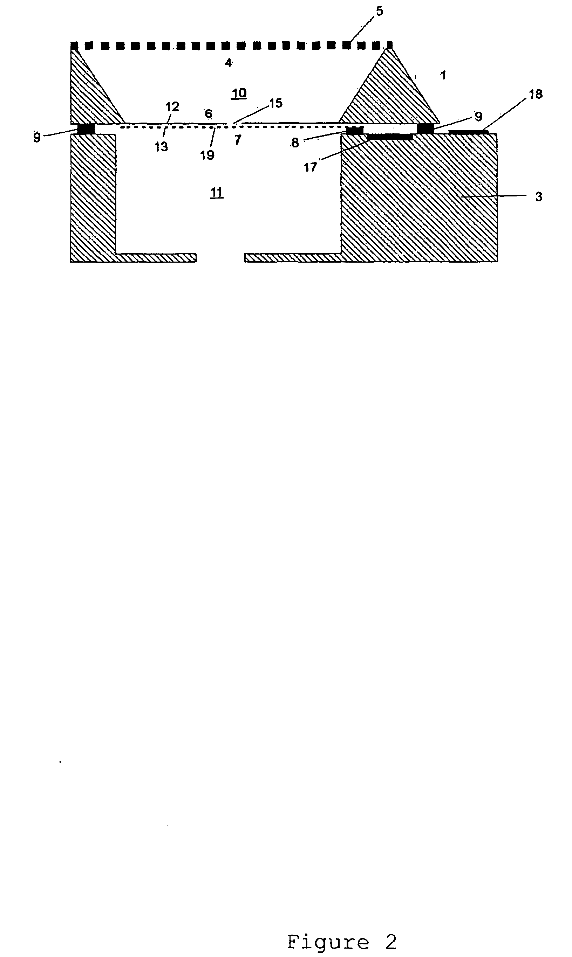

The microphone illustrated in Fig. 2 is a directional microphone sensing a pressure gradient. The microphone has the same basic structure as the microphone in Fig. 1, but in order to obtain directional sensitivity an opening 24 has been introduced between to the backchamber 11 so as to allow for an acoustic wave to enter the backchamber 11. The deflection of the membrane 12 is therefore a measure for the pressure gradient over the membrane 12, resulting in a directional sensitivity.

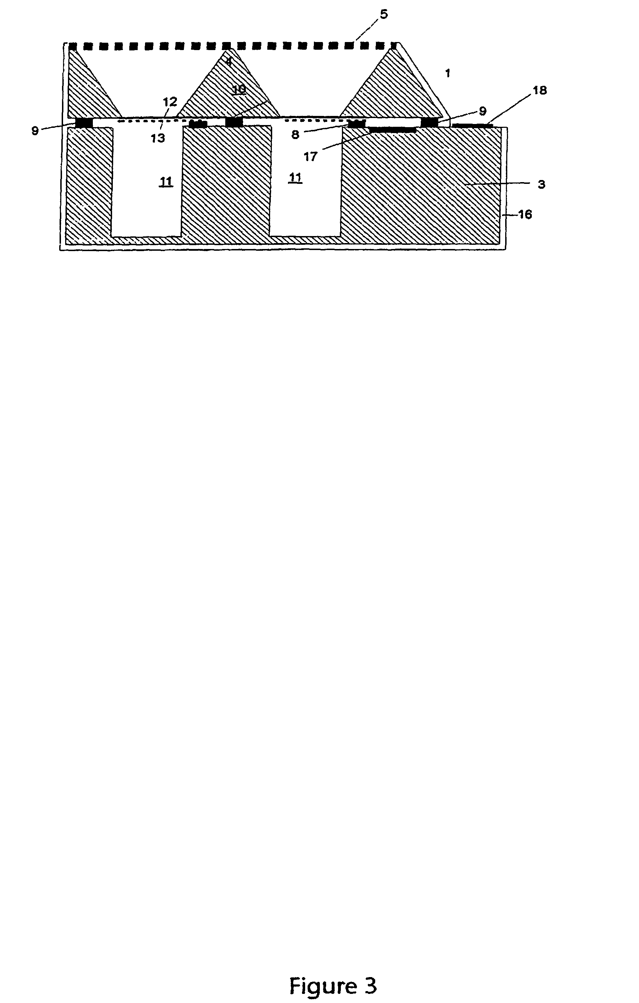

The microphone illustrated in Fig. 3 is also a directional microphone. This microphone senses a phase difference of an impinging acoustical wave. The microphone has the same basic structure as the microphone in Fig. 1, however, the microphone in Fig. 3 uses two sensing elements in the first substrate 1, both containing a membrane 12 and a backplate 13 and both being connected to the second substrate 3 by solder bumps 8 and seal ring 9 with a cavity 11 for each sensing element and both covered by a filter 5.

It will be evident for the skilled person to increase the number of sensing elements from two (as shown in Fig. 3) to an arbitrary number of sensing elements - e.g. arranged in an array of columns and rows.

## Claims

1. A transducer comprising
- a first Si-based chip (1) with a first upper surface and a first lower surface opposite the first upper surface and enclosing a first chamber (10) extending from a first opening (4) of the first chamber at the first upper surface and through the first Si-based chip (1) to a second opening (6) at the first lower surface, said first Si-based chip (1) further comprising a first diaphragm (12) that is positioned at the first lower surface and covering the second opening (6),
- a second Si-based chip (3) with a second upper surface and a second lower surface, the second Si-based chip (3) enclosing a second chamber (11) extending into the second Si-based chip (3) from a third opening (7) at the second upper surface, the first Si-based chip (1) being positioned on the second Si-based chip (3) with the second opening (6) aligned with the third opening (7),
**characterised in that** the second Si-based chip (3) further comprises a Si-based integrated circuit (17), said Si-based integrated circuit (17) being electrically connected to the first diaphragm via one or more contact elements (8), and said Si-based integrated circuit (17) being integrated with the second Si-based chip (3) and being positioned at the second upper surface of the second Si-based chip (3).

2. A transducer according to claim 1, further comprising a first back plate (13) that is arranged adjacent and substantially parallel to the first diaphragm (12).

3. A transducer according to claim 2, wherein the first diaphragm (12) and the first back plate (13) are conductive and form a capacitor in combination.

4. A transducer according to claim 2 or 3, further comprising additional contact elements for connection of the first back plate (13) to the Si-based integrated circuit (17).

5. A transducer according to claim 4, wherein the contact elements form solder bumps, said solder bumps forming an airtight seal between the first and second Si-based chips.

6. A transducer according to claim 5, wherein the airtight seal forms a ring comprising epoxy.

7. A transducer according to any of the preceding claims, further comprising a fourth opening between the second chamber in the second Si-based chip (3) and the second lower surface.

8. A transducer according to any of the preceding claims, wherein the first diaphragm (12) is attached to the first Si-based chip (1) before assembly of the first and second Si-based chips.

9. A transducer according to any of the preceding claims, further comprising a filter (5) covering the first opening (4).

10. A transducer according to any of the preceding claims, further comprising an encapsulation (16), said encapsulation (16) surrounding the first and second Si-based chips and having an opening that is aligned with the first opening (4).

11. A transducer according to any of the preceding claims, further comprising
- a third chamber being enclosed in the first Si-based chip (1) and extending from a fifth opening of the third chamber at the first upper surface and through the first Si-based chip (1) to a sixth opening at the first lower surface,
- a second diaphragm that is positioned at the first lower surface and covering the sixth opening of the third chamber, and
- a fourth chamber extending into the second Si-based chip (3) from a seventh opening at the second upper surface, the sixth opening of the third chamber being aligned with the seventh opening.

12. A transducer according to claim 11, further comprising a second back plate that is arranged adjacent and substantially parallel to the second diaphragm.

13. A transducer according to claim 12, wherein the second diaphragm and the second back plate are conductive and form a capacitor in combination.

14. A transducer according to any of claims 11-13, further comprising solder bumps for connection of the second diaphragm and the second back plate to the Si-based integrated circuit.

15. A transducer according to any of claims 11-14, further comprising a filter covering the fifth opening.

16. A transducer according to any of claims 11-15, further comprising an encapsulation, said encapsulation surrounding the first and second Si-based chips and having openings that are aligned with the first and fifth opening.

## Patentansprüche

1. Wandler, der aufweist:
einen ersten Si-basierten Chip (1) mit einer ersten oberen Oberfläche und einer zur ersten oberen Oberfläche entgegengesetzten ersten unteren Oberfläche, der eine erste Kammer (10) umschließt, die sich von einer ersten Öffnung (4) der ersten Kammer an der ersten oberen Oberfläche und durch den ersten Si-basierten Chip (1) zu einer zweiten Öffnung (6) an der ersten unteren Oberfläche erstreckt, wobei der erste Si-basierte Chip (1) ferner eine erste Membran (12) aufweist, die an der ersten unteren Oberfläche positioniert ist und die zweite Öffnung (6) bedeckt;
einen zweiten Si-basierten Chip (3) mit einer zweiten oberen Oberfläche und einer zweiten unteren Oberfläche, wobei der zweite Si-basierte Chip (3) eine zweite Kammer (11) umschließt, die sich von einer dritten Öffnung (7) an der zweiten oberen Oberfläche in den zweiten Si-basierten Chip (3) erstreckt, wobei der erste Si-basierte Chip (1) auf dem zweiten Si-basierten Chip (3) positioniert ist, wobei die zweite Öffnung (6) mit der dritten Öffnung (7) ausgerichtet ist;
**dadurch gekennzeichnet, daß** der zweite Si-basierte Chip (3) ferner eine Si-basierte integrierte Schaltung (17) aufweist, wobei diese Si-basierte Schaltung (17) über ein oder mehrere Kontaktelemente (8) mit der ersten Membran elektrisch verbunden ist und die Si-basierte integrierte Schaltung (17) mit dem zweiten Si-basierten Chip (3) integriert ist und an der zweiten oberen Oberfläche des zweiten Si-basierten Chip (3) positioniert ist.

2. Wandler nach Anspruch 1, der ferner eine erste Verstärkungsplatte (13) aufweist, die benachbart und im wesentlichen parallel zu der ersten Membran (12) angeordnet ist.

3. Wandler nach Anspruch 2, wobei die erste Membran (12) und die erste Verstärkungsplatte (13) leitend sind und zusammen einen Kondensator bilden.

4. Wandler nach Anspruch 2 oder 3, der ferner zusätzliche Kontaktelemente zur Verbindung der ersten Verstärkungsplatte (13) mit der Si-basierten integrierten Schaltung (17) aufweist.

5. Wandler nach Anspruch 4, wobei die Kontaktelemente Löthügel bilden, wobei diese Löthügel einen luftdichten Verschluß zwischen dem ersten und zweiten Si-basierten Chip bilden.

6. Wandler nach Anspruch 5, wobei der luftdichte Verschluß einen Ring bildet, der Epoxid aufweist.

7. Wandler nach einem der vorhergehenden Ansprüche, der ferner eine vierte Öffnung zwischen der zweiten Kammer in dem zweiten Si-basierten Chip (3) und der zweiten unteren Oberfläche aufweist.

8. Wandler nach einem der vorhergehenden Ansprüche, wobei die erste Membran (12) vor der Montage der ersten und zweiten Si-basierten Chips an dem ersten Si-basierten Chip (1) befestigt wird.

9. Wandler nach einem der vorhergehenden Ansprüche, der ferner ein Filter (5) aufweist, das die erste Öffnung (4) bedeckt.

10. Wandler nach einem der vorhergehenden Ansprüche, der ferner ein Gehäuse (16) aufweist, wobei dieses Gehäuse (16) den ersten und zweiten Si-basierten Chip umgibt und eine Öffnung hat, die mit der ersten Öffnung (4) ausgerichtet ist.

11. Wandler nach einem der vorhergehenden Ansprüche, der ferner aufweist:
- eine dritte Kammer, die in dem ersten Si-basierten Chip (1) eingeschlossen ist und sich von einer fünften Öffnung der dritten Kammer an der ersten oberen Oberfläche und durch den ersten Si-basierten Chip (1) zu einer sechsten Öffnung an der ersten unteren Oberfläche erstreckt,
- eine zweite Membran, die an der ersten unteren Oberfläche positioniert ist und die sechste Öffnung der dritten Kammer bedeckt, und
- eine vierte Kammer, die sich von einer siebten Öffnung an der zweiten oberen Oberfläche in den zweiten Si-basierten Chip (3) erstreckt, wobei die sechste Öffnung der dritten Kammer mit der siebten Öffnung ausgerichtet ist.

12. Wandler nach Anspruch 11, der ferner eine zweite Verstärkungsplatte aufweist, die benachbart und im wesentlichen parallel zu der zweiten Membran angeordnet ist.

13. Wandler nach Anspruch 12, wobei die zweite Membran und die zweite Verstärkungsplatte leitend sind und zusammen einen Kondensator bilden.

14. Wandler nach einem der Ansprüche 11 bis 13, der ferner Löthügel für die Verbindung der zweiten Membran und der zweiten Verstärkungsplatte mit der Si-basierten integrierten Schaltung aufweist.

15. Wandler nach einem der Ansprüche 11 bis 14, der ferner ein Filter aufweist, das die fünfte Öffnung bedeckt.

16. Wandler nach einem der Ansprüche 11 bis 15, der ferner ein Gehäuse aufweist, welches den ersten und zweiten Si-basierten Chip umgibt und Öffnungen hat, die mit der ersten und fünften Öffnung ausgerichtet sind.

## Revendications

1. Transducteur, comprenant :
- une première puce en silicium (1) avec une première surface supérieure et une première surface inférieure opposée à la première surface supérieure et entourant une première chambre (10) s'étendant d'une première ouverture (4) de la première chambre à la première surface supérieure et à travers la première puce en silicium (1) à une deuxième ouverture (6) à la première surface inférieure, ladite première puce en silicium (1) comprenant en outre une première membrane (12) qui est positionnée à la première surface inférieure et recouvrant la deuxième ouverture (6) ;
- une deuxième puce en silicium (3) avec une deuxième surface supérieure et une deuxième surface inférieure, la deuxième puce en silicium (3) entourant une deuxième chambre (11) s'étendant dans la deuxième puce en silicium (3) d'une troisième ouverture (7) à la deuxième surface supérieure, la première puce en silicium (1) étant positionnée sur la deuxième puce en silicium (3) avec la deuxième ouverture (6) alignée sur la troisième ouverture (7) ;
**caractérisé en ce que** la deuxième puce en silicium (3) comprend en outre un circuit intégré en silicium (17), ledit circuit intégré en silicium (17) étant connecté électriquement à la première membrane par l'intermédiaire d'un or plus d'éléments de contact (8), et ledit circuit intégré en silicium (17) étant intégré avec la deuxième puce en silicium (3) et étant positionné à la deuxième surface supérieure de la deuxième puce en silicium (3).

2. Transducteur selon la revendication 1, comprenant en outre une première plaque arrière (13) qui est disposée adjacente et substantiellement parallèlement à la première membrane (12).

3. Transducteur selon la revendication 2, dans lequel la première membrane (12) et la première plaque arrière (13) sont conductrices et forment ensemble un condensateur.

4. Transducteur selon la revendication 2 ou 3, comprenant en outre des éléments de contact supplémentaires pour raccordement de la première plaque arrière (13) au circuit intégré en silicium (17).

5. Transducteur selon la revendication 4, dans lequel les éléments de contact forment des cordons de soudure, lesdits cordons de soudure formant un scellement hermétique entre les première et deuxième puces en silicium.

6. Transducteur selon la revendication 5, dans lequel le scellement hermétique forme un anneau comprenant de l'époxyde.

7. Transducteur selon l'une quelconque des revendications précédentes, comprenant en outre une quatrième ouverture entre la deuxième chambre dans la deuxième puce en silicium (3) et la deuxième surface inférieure.

8. Transducteur selon l'une quelconque des revendications précédentes, dans lequel la première membrane (12) est fixée à la première puce en silicium (1) avant assemblage des première et deuxième puces en silicium.

9. Transducteur selon l'une quelconque des revendications précédentes, comprenant en outre un filtre (5) recouvrant la première ouverture (4).

10. Transducteur selon l'une quelconque des revendications précédentes, comprenant en outre un encapsulage (16), ledit encapsulage (16) entourant les première et deuxième puces en silicium et ayant une ouverture qui est alignée avec la première ouverture (4).

11. Transducteur selon l'une quelconque des revendications précédentes, comprenant en outre :
- une troisième chambre étant incorporée dans la première puce en silicium (1) et s'étendant d'une cinquième ouverture de la troisième chambre à la première surface supérieure et à travers la première puce en silicium (1) à une sixième ouverture à la première surface inférieure,
- une deuxième membrane qui est positionnée à la première surface inférieure et recouvrant la sixième ouverture de la troisième chambre, et
- une quatrième chambre s'étendant dans la deuxième puce en silicium (3) à partir d'une septième ouverture à la deuxième surface supérieure, la sixième ouverture de la troisième chambre étant alignée avec la septième ouverture.

12. Transducteur selon la revendication 11, comprenant en outre une deuxième plaque arrière qui est disposée adjacente et substantiellement parallèlement à la deuxième membrane.

13. Transducteur selon la revendication 12, dans lequel la deuxième membrane et la deuxième plaque arrière sont conductrices et forment ensemble un condensateur.

14. Transducteur selon l'une quelconque des revendications 11 à 13, comprenant en outre des cordons de soudure pour raccordement de la deuxième membrane et de la deuxième plaque arrière au circuit intégré en silicium.

15. Transducteur selon l'une quelconque des revendications 11 à 14, comprenant en outre un filtre recouvrant la cinquième ouverture.

16. Transducteur selon l'une quelconque des revendications 11 à 15, comprenant en outre un encapsulage, ledit encapsulage entourant les première et deuxième puces en silicium et ayant des ouvertures qui sont alignées sur les première et cinquième ouvertures.
